# EUROPÄISCHE PATENTSCHRIFT

(11) **EP 2 693 107 B1**
(45) Veröffentlichungstag und Bekanntmachung des Hinweises auf die Patenterteilung: **03.06.2015**
(21) Anmeldenummer: 13172625.9
(22) Anmeldetag: 19.06.2013
(51) Int. Cl.: F21S 8/10, F21V 17/00, G02B 7/00

(54) **Primäroptikeinheit für ein Lichtmodul**
Primary lens unit for a light module
Unité optique primaire pour un module d'éclairage

(30) Priorität: 03.08.2012 DE 102012213843
(43) Veröffentlichungstag der Anmeldung: 05.02.2014
(73) Patentinhaber: Automotive Lighting Reutlingen GmbH, 72762 Reutlingen (DE)
(72) Erfinder: Braun, Stephan, 70771 Echterdingen (DE); Schauwecker, Friedrich, 72793 Pfullingen (DE); Vladau, Nicolae, 72076 Tübingen (DE)
(74) Vertreter: DREISS Patentanwälte PartG mbB

(56) Entgegenhaltungen:
- EP-A1- 1 396 753
- WO-A1-2009/117834
- WO-A1-2013/020155
- US-A1- 2008 253 144
- US-A1- 2009 016 074

## Beschreibung

Die Erfindung betrifft eine Primäroptikeinheit für Lichtmodule, welche insbesondere in Kfz-Scheinwerfern Verwendung finden kann.

Im vorliegenden Zusammenhang ist unter einem Lichtmodul die eigentlich Licht aussendende Einheit eines Scheinwerfers zu verstehen, welche die gewünschte Abstrahllichtverteilung abgibt. Je nach Anwendungsgebiet muss die Abstrahllichtverteilung bestimmte, in der Regel gesetzlich vorgegebene, charakteristische Intensitätsverläufe aufweisen. Denkbar ist beispielsweise die Erzeugung einer abgeblendeten Lichtverteilung, welche sich durch eine abschnittsweise im Wesentlichen horizontal verlaufende Hell-Dunkel-Grenze auszeichnet. Andererseits kann die Erzeugung einer Fernlicht-Lichtverteilung erwünscht sein, welche einen ausgeleuchteten Bereich oberhalb der Hell-Dunkel-Grenze aufweist. Zur Weiterentwicklung kann die Erzeugung von Teil-Fernlicht oder Teil-Abblendlicht erwünscht sein. Hierbei werden aus der Abstrahllichtverteilung gezielt bestimmte Bereiche ausgeblendet beziehungsweise verdunkelt, so dass beispielsweise ein gefährliches Blenden von Gegenverkehr vermieden werden kann.

Zur Erzeugung der genannten Abstrahllichtverteilungen sind verschiedenartige technische Lösungen bekannt. Beispielsweise beschreiben die Druckschriften DE 10 2008 013 603 A1, DE 10 2009 053 581 B3, und DE 10 2010 0233 360 A2 jeweils Lichtmodule, welche den folgenden Grundlängenaufbau haben: Eine matrixartige Anordnung von Halbleiterlichtquellen sowie eine Primäroptik, welche eine Mehrzahl von Lichtleitabschnitten aufweist, wobei jeder Lichtleitabschnitt eine Lichteintrittsfläche und eine Lichtaustrittsfläche hat. Die Lichteintrittsflächen sind matrixartig in einer Weise angeordnet, das jeweils eine Lichteintrittsfläche einer Halbleiterlichtquelle zugeordnet ist. Die Lichtaustrittsflächen sind ebenfalls matrixartig angeordnet und bilden eine gemeinsame Primäroptikaustrittsfläche. Die beschriebenen Lichtmodule haben ferner eine Sekundäroptik, welche dazu eingerichtet ist, die sich im Betrieb des Lichtmoduls auf der Primäroptikaustrittsfläche einstellende Zwischenlichtverteilung als Abstrahllichtverteilung in das Vorfeld des Lichtmoduls zu projizieren. Ein Teil-Fernlicht kann mit derartigen Lichtmodulen dadurch realisiert werden, dass gezielt einzelne der matrixartig angeordneten Halbleiterlichtquellen ausgeschaltet werden, wobei die übrigen Halbleiterlichtquellen weiterhin Licht abstrahlen.

Aus der Druckschrift US 2009/0016074 A1 ist eine Primäroptikeinheit bekannt, die ein Primäroptikelement mit einem Halteabschnitt und einer Mehrzahl von Lichtleitabschnitten umfasst. Die Primäroptikeinheit weist ein Trägerelement auf, an welches der Halteabschnitt zum Haltern des Primäroptikelements anliegt.

Bei den angesprochenen Lichtmodulen kommt der Primäroptik eine wesentliche Bedeutung zu. Die Primäroptik dient dazu, aus dem Licht der Halbleiterlichtquellen eine Zwischenlichtverteilung auf der Lichtaustrittsfläche der Primäroptik zu erzeugen. Diese Zwischenlichtverteilung weist fein abgestimmte Intensitätsverläufe auf und wird über die Sekundäroptik in die gewünschte Abstrahllichtverteilung projiziert.

Für die Funktionsfähigkeit der genannten Lichtmodule ist es von entscheidender Bedeutung, dass die Primäroptik präzise in Bezug zu den Halbleiterlichtquellen ausgerichtet ist. Zum einen hat die Anordnung der Primäroptik relativ zur Lichtquelle wesentlichen Einfluss darauf, welcher Anteil des von der Lichtquelle ausgestrahlten Lichts von der Primäroptik erfasst wird. Je größer der Anteil des von der Primäroptik erfassten Lichts, desto höher die Effizienz des Lichtmoduls. Darüber hinaus kann die sich auf der Lichtaustrittsfläche der Primäroptik einstellende Zwischenlichtverteilung empfindlich von der Positionierung einer Lichteintrittsfläche der Primäroptik relativ zu der Lichtquelle abhängen.

Für manche Anwendungsgebiete ist es erwünscht, dass die Primäroptik eine große Anzahl (mehrere zehn oder hundert) von Lichtleitabschnitten mit jeweils einer Lichteintrittsfläche zum Einkoppeln von Licht in die Lichtleitabschnitte aufweist. Jeder dieser Lichtleitabschnitte ist dann vorzugsweise einer Halbleiterlichtquelle individuell zugeordnet. Dadurch kann beispielsweise ein Teil-Fernlicht der oben angesprochenen Art mit hoher räumlicher Auflösung realisiert werden. Eine solche Anordnung setzt jedoch voraus, dass jede Lichteintrittsfläche eines Lichtleitabschnitts präzise zu der jeweiligen Halbleiterlichtquelle ausgerichtet wird. Dies bedeutet einen erheblichem konstruktiven Aufwand.

Ein weiteres Problem besteht darin, dass im Betrieb eines Lichtmoduls aufgrund der Wärmeabstrahlung der Lichtquellen hohe Temperaturen auftreten können. Die Erwärmung ist umso größer, je näher das jeweilige Bauteil an einer Halbleiterlichtquelle angeordnet ist. Sind die Bauteile aus Kunststoff angefertigt, kann eine Erwärmung zu einer unerwünschten thermischen Verformung führen. Darüber hinaus können erhöhte Temperaturen zu Ausgasungen von Substanzen (beispielsweise Lösungsmitteln) aus Kunststoffen führen. Diese Substanzen können auf optisch wirksamen Flächen (zum Beispiel Lichteintrittsflächen der Primäroptik) zu Niederschlägen führen oder die Oberflächen angreifen. Dies kann die optische Qualität beeinträchtigen.

Ein weiteres Problem besteht darin, dass die optisch funktionalen Teile der Primäroptik in der Regel aus einem nicht leitenden, dielektrischen Material ausgebildet sind. Im Betrieb des Lichtmoduls kann es daher zu einer elektrostatischen Aufladung der Primäroptik gegenüber den elektrischen Bauteilen der Lichtquelle kommen. Wird die Primäroptik, wie grundsätzlich erwünscht, möglichst nahe relativ zu der Halbleiterlichtquelle positioniert, so besteht die Gefahr einer elektrostatischen Entladung. Dies kann zu einer Beschädigung der elektronischen Bauteile führen.

Die Aufgabe der Erfindung besteht darin, den Aufbau eines Lichtmoduls der eingangs genannten Art mit präziser Positionierung der Lichteintrittsflächen der Primäroptik relativ zu der Halbleiterlichtquelle zu ermöglichen, wobei die angesprochenen, mit der räumlichen Nähe von Halbleiterlichtquelle und Primäroptik verbundenen Probleme verringert werden sollen.

Diese Aufgabe wird durch eine Primäroptikeinheit für Lichtmodule gemäß dem Anspruch 1 gelöst. Diese Primäroptikeinheit umfasst mindestens die folgenden Elemente:
- ein Primäroptikelement zum Formen einer gewünschten Zwischenlichtverteilung aus dem Licht einer Lichtquelle, insbesondere zum Bündeln oder Kollimieren von Licht einer Lichtquelle, wobei das Primäroptikelement einen Halteabschnitt zum Haltern des Primäroptikelements in der Primäroptikeinheit sowie eine Mehrzahl von Lichtleitabschnitten aufweist. Jeder Lichtleitabschnitt erstreckt sich zwischen einer Lichteintrittsfläche zum Einkoppeln von Licht in den Lichtleitabschnitt und einer Lichtaustrittsfläche zum Auskoppeln von Licht aus dem Primäroptikelement durch die Lichtaustrittsfläche hindurch. Dabei ist der Lichtleitabschnitt derart ausgebildet, dass Licht unter interner Totalreflexion von der Lichteintrittsfläche zur Lichtaustrittsfläche geleitet werden kann (interne Totalreflexion tritt auf für Lichtstrahlen, für die beim Auftreffen auf eine Oberfläche des Lichtleitabschnittes der Grenzwinkel der Totalreflexion zum Lot auf die Oberfläche überschritten ist).
- Ein Trägerelement, an welches der Halteabschnitt zum Haltern des Primäroptikelements anliegt und welches derart ausgebildet ist, dass sich die Lichtleitabschnitte berührungsfrei zu dem Trägerelement erstrecken.
- Ein Abdeckblech, welches eine Mehrzahl von Führungslöchern aufweist und welches derart ausgebildet und angeordnet ist, dass die Lichtleitelemente durch die Führungslöcher verlaufen und dadurch gehaltert werden.

Die erfindungsgemäße Primäroptikeinheit stellt insofern eine komplexe Baueinheit dar. Dabei ist das Primäroptikelement diejenige optisch funktionale Einheit eines Lichtmoduls, welche zur Erzeugung einer gewünschten Zwischenlichtverteilung (unmittelbar) aus dem Licht der Lichtquelle dient. Die endgültige Abstrahllichtverteilung wird bei dem Lichtmodul in der Regel durch eine Sekundäroptik erzeugt, welche dazu eingerichtet ist, die von der Primäroptik erzeugte Zwischenlichtverteilung als Abstrahllichtverteilung in das Vorfeld des Lichtmoduls zu projizieren.

Die erfindungsgemäße Primäroptikeinheit kann als vormontierte Baueinheit ausgestaltet werden. Zur Endmontage eines Lichtmoduls muss dann lediglich die Primäroptikeinheit relativ zu einer Lichtquelleneinheit mit Halbleiterlichtquellen ausgerichtet und befestigt werden.

Bei der erfindungsgemäßen Primäroptikeinheit berühren die Lichtleitabschnitte das Trägerelement nicht. Vorzugsweise liegt an dem Trägerelement lediglich der Halteabschnitt des Primäroptikelements an. Im Übrigen bestehen dann keine Kontaktbereiche zwischen Trägerelement und Primäroptikelement. Da die Lichtleitung in den Lichtleitabschnitten durch interne Totalreflexion erfolgt, könnte die Lichtleitung durch einen Kontakt der Oberfläche des Lichtleitelements beeinträchtigt werden. Dieser nachteilige Effekt wird bei der erfindungsgemäßen Primäroptikeinheit vermieden, da die Lichtleitabschnitte das Trägerelement nicht berühren.

Auch ohne Führung der Lichtleitabschnitte durch das Trägerelement kann bei der erfindungsgemäßen Primäroptikeinheit eine genaue Position für jeden Lichtleitabschnitt vorgegeben werden. Dies erfolgt mittels des Abdeckblechs, da die Lichtleitabschnitte durch die Führungslöcher des Abdeckblechs geführt werden und so die Lichtleitabschnitte in einer gewünschten Position gehaltert werden. Es ist dabei nicht nötig, dass die Lichtleitabschnitte durch das Trägerelement gehalten werden. Die Oberflächen der Lichtleitabschnitte werden daher nur in den Bereichen kontaktiert, in welchen die schmalen begrenzenden Wandungen der Führungslöcher des Abdeckblechs mit den Lichtleitabschnitten in Kontakt stehen. Eine Beeinträchtigung von solchen Seitenflächen der Lichtleitabschnitte, welche zur Lichtleitung durch Totalreflexion ausgebildet sind, wird daher weitgehend vermieden. Da in dem Abdeckblech eine Vielzahl von Führungslöchern vorgesehen sein können, können Primäroptikelemente mit einer Vielzahl an Lichtleitabschnitten Verwendung finden und jeder Lichtleitabschnitt präzise ausgerichtet werden.

Bei der Endmontage eines Lichtmoduls sollen zum Einen die Lichteintrittsflächen der Lichtleitabschnitte so nahe wie möglich an Lichtabstrahlflächen von Halbleiterlichtquellen des Lichtmoduls angeordnet werden. Andererseits sollen die Lichtabstrahlflächen der Halbleiterlichtquellen nicht von den Lichteintrittsflächen berührt werden. Dies könnte zu einer Beeinträchtigung der Halbleiterlichtquelle führen, weshalb von Bauteileherstellern in solchen Fällen oftmals keine Gewährleistung übernommen wird. Die Führungslöcher im Abdeckblech erlauben bei der erfindungsgemäßen Primäroptikeinheit eine präzise Positionierung der Lichteintrittsflächen im Lichtmodul. Insbesondere lässt sich bei der Endmontage des Lichtmoduls der Abstand zwischen Lichteintrittsfläche und Lichtabstrahlfläche der Halbleiterlichtquelle mit einer Genauigkeit von typischerweise 0,1 mm oder weniger einstellen.

Das Abdeckblech ist vorzugsweise derart angeordnet, dass es bei Endmontage eines Lichtmoduls mit einer erfindungsgemäßen Primäroptikeinheit den Halbleiterlichtquellen des Lichtmoduls zugewandt ist. Das Abdeckblech ist also derart ausgebildet und angeordnet, dass es im zusammengebauten Zustand des Lichtmoduls zwischen dem Trägerelement und den Halbleiterlichtquellen verläuft. Dadurch wird ein Wärmeschutz für das Trägerelement bereitgestellt, da die von den Halbleiterlichtquellen erzeugte Wärme durch das Abdeckblech von dem Trägerelement abgeschirmt wird. Bei Verwendung von Kunststoffbauteilen kann so die oben angesprochene Ausgasung problematischer Substanzen verhindert werden. Darüber hinaus kann das Abdeckblech elektrisch mit einem Erdungspunkt des Lichtmoduls verbunden werden. Dadurch können elektrostatische Aufladungen beispielsweise des Primäroptikelements gegenüber den elektrischen Bauteilen der Halbleiterlichtquellen wirksam abgeführt oder abgeschirmt werden, da eine Erdung hergestellt wird. Insbesondere kann das Abdeckblech derart ausgebildet sein, dass bis auf die Lichteintrittsflächen sämtliche Abschnitte des Primäroptikelements und z.B. zusätzlich auch des Trägerelements im endmontierten Zustand des Lichtmoduls elektrisch gegenüber den Halbleiterlichtquellen abgeschirmt sind.

Das Abdeckdeckblech erstreckt sich vorzugsweise im Wesentlichen senkrecht zur Erstreckungsrichtung der Lichtleitabschnitte.

Zur Verbesserung kann das Abdeckblech mit einem seiner Abschnitte über einen Rand des Trägerelements hinausragen und an diesem Abschnitt ein Positionierungsmittel aufweisen, welches bei der Endmontage eines Lichtmoduls mit der Primäroptikeinheit als Referenzpunkt zur genauen Ausrichtung der Primäroptikeinheit in Bezug auf die Halbleiterlichtquellen dient. Das Positionierungsmittel kann beispielsweise als ein Positionierungsloch ausgebildet sein, welches eine definierte Position gegenüber den Führungslöchern für die Lichtleitabschnitte hat. Solche Ausgestaltungen ermöglichen eine vollautomatisierte Positionierung während der Endmontage des Lichtmoduls, beispielsweise mittels eines kameragesteuerten Handhabungsroboters.

Die Lichtleitabschnitte und/oder das gesamte Primäroptikelement bestehen vorzugsweise aus Silikon. Silikon ist ein hochtransparentes Material und weist eine hohe Temperaturbeständigkeit bis cirka 260°C auf. Außerdem kann Silikon in vorteilhafter Weise im Spritzgussverfahren auch in filigrane Strukturen gespritzt werden. Die fertige Struktur ist dann allerdings flexibel und biegeschlaff. Die erfindungsgemäße Primäroptikeinheit ermöglicht es, auch derartige flexible und biegeschlaffe Primäroptikelemente aus Silikon zu verwenden. Da die Lichtleitabschnitte durch die Führungslöcher des Abdeckblechs gehaltert und geführt werden, kann bei der erfindungsgemäßen Primäroptikeinheit ein Primäroptikelement aus Silikon mit einer Vielzahl filigraner, sich länglich erstreckender, flexibler und biegeschlaffer Lichtleitabschnitte verwendet werden.

Vorzugsweise bildet das Abdeckblech mit einer seiner Oberflächen eine der Lichtaustrittsfläche abgewandte Stirnseite der Primäroptikeinheit. Diese Stirnseite ist bei Endmontage eines Lichtmoduls mit der Primäroptikeinheit den Halbleiterlichtquellen des Lichtmoduls zugewandt. Dabei sind die Lichteintrittsflächen des Primäroptikelements bei Betrachtung der Primäroptikeinheit auf der Stirnseite sichtbar. Die Lichtleitabschnitte können über die Stirnseite hinausragen. Vorteilhaft ist aber auch, wenn die Lichteintrittsflächen bündig mit einer die Stirnseite bildenden Oberfläche des Abdeckblechs verlaufen. Da das Abdeckblech die Stirnseite bildet, wird Störlicht, welches nicht wie beabsichtigt in das Primäroptikelement eingekoppelt wird, effektiv von weiteren optischen Elementen abgeschirmt. Dadurch wird z.B. verhindert, dass dieses Störlicht bei einem Lichtmodul durch eine Sekundäroptikeinheit ebenfalls in das vor dem Lichtmodul liegende Vorfeld projiziert wird und dort die beabsichtigte Abstrahllichtverteilung in ungewollter Weise überlagert. Somit kann beispielsweise ein kontrastreiches Fernlicht realisiert werden.

Vorzugsweise ist das Abdeckblech derart ausgebildet, dass im verbauten Zustand der Primäroptikeinheit ausgehend von den Lichtquellen der gesamte Lichtweg mit Ausnahme der Führungslöcher von dem Abdeckblech verdeckt ist.

Bevorzugt ist, wenn je einem Lichtleitabschnitt genau ein Führungsloch zugeordnet ist. Dadurch ist eine besonders präzise Positionierung und eine effektive Abschirmung möglich. Denkbar sind jedoch auch Anwendungen, bei denen zwei oder mehrere Lichtleitabschnitte gemeinsam durch ein Führungsloch verlaufen.

Jedes Führungsloch ist insbesondere derart ausgebildet, dass das Abdeckblech den jeweils durch das Führungsloch tretenden Lichtleitabschnitt bündig umgibt. Insofern ist jedes Führungsloch von einer schmalen Führungsfläche begrenzt (nämlich dem Rand des Führungsloches im Abdeckblech), deren Ausdehnung in einer Richtung gerade der Dicke des Abdeckblechs entspricht.

Bei dem Primäroptikelement können verschiedene vorteilhafte Ausgestaltungen, insbesondere in dem von den Lichteintrittsflächen abgewandten Bereich, vorgenommen werden. Die Lichtleitabschnitte erstrecken sich ausgehend von der Lichtaustrittsfläche insbesondere länglich in eine jeweilige Lichtleitrichtung des Lichtleitabschnitts. Die Lichtleitrichtungen der einzelnen Lichtleitabschnitte sind vorzugsweise im Wesentlichen parallel. Das Primäroptikelement kann jedoch auch gekrümmt ausgebildet sein, so dass die Lichtleitabschnitte in der Art eines sich aufweitenden Büschels ausgehend von der Lichtaustrittsfläche verlaufen. Dann kann die Lichtaustrittsfläche ebenfalls entsprechend gekrümmt sein und die Lichtleitabschnitte jeweils lokal senkrecht auf der gekrümmten Lichtaustrittsfläche stehen.

Denkbar ist auch, dass jedem Lichtleitabschnitt eine Lichtaustrittsfläche individuell zugeordnet ist. Diese individuelle Lichtaustrittsfläche muss nicht eben sein, sondern kann frei geformt werden, beispielsweise kissenartig. Die individuellen Lichtaustrittsflächen sind vorzugsweise matrixartig nebeneinander angeordnet, so dass eine gemeinsame Primäroptikaustrittsfläche gebildet wird.

Der Halteabschnitt des Primäroptikelements umgibt vorzugsweise die Lichtaustrittsfläche beziehungsweise die Primäroptikaustrittsfläche rahmenartig oder kragenartig.

Die Führungslöcher sind in dem Abdeckblech vorzugsweise matrixartig angeordnet, so dass im zusammengebauten Zustand der Primäroptikeinheit die Lichteintrittsflächen ebenfalls matrixartig angeordnet sind. Dies erlaubt es, die Anordnung der Lichteintrittsflächen an die Anordnung von Halbleiterlichtquellen einer Lichtquelleneinheit eines Lichtmoduls anzupassen.

Das Trägerelement umfasst vorzugsweise einen Anlageabschnitt sowie einen Separatorabschnitt. An dem Anlageabschnitt liegt der Halteabschnitt des Primäroptikelements an. An dem Separatorabschnitt ist das Abdeckblech angeordnet. Insbesondere verläuft der Separatorabschnitt mit einem Zwischenbereich abschnittsweise zwischen zwei Lichtleitabschnitten. Dabei kann sich der Separatorabschnitt (mit einem Abstandshaltebereich) außerdem ausgehend von dem Anlageabschnitt in diejenige Richtung erstrecken, in welcher die Primäroptikeinheit mit einer Lichtquelleneinheit beziehungsweise einer Lichtquelle zur Endmontage eines Lichtmoduls verbunden wird. Insofern verläuft der Separatorabschnitt zwischen dem Anlageabschnitt und dem Abdeckblech.

Der Separatorabschnitt definiert einen Abstand zwischen dem Halteabschnitt und dem Abdeckblech. Da der Separatorabschnitt vorzugsweise Bereiche aufweist, welche sich zwischen verschiedenen Lichtleitabschnitten erstreckt, kann die Montage der Primäroptikeinheit erleichtert werden. Zwar berührt der Separatorabschnitt nicht die Lichtleitabschnitte, jedoch werden durch die genannten Bereiche Referenzpositionen für das Zusammenfügen von Primäroptikelement und Trägerelement vorgegeben. Dies ist insbesondere vorteilhaft, wenn das Primäroptikelement eine Vielzahl von Lichtleitabschnitten aufweist. Dabei muss nicht zwischen allen benachbarten Lichtleitabschnitten jeweils ein Abschnitt des Separatorabschnitts verlaufen. Denkbar ist auch, dass sich der Separatorabschnitt abschnittsweise zwischen Gruppen von Lichtleitabschnitten erstreckt.

Vorzugsweise ist der Separatorabschnitt derart ausgebildet, dass für je zwei benachbarte Lichtleitabschnitte gerade ein sich zwischen diesen Lichtleitabschnitten erstreckender Bereich des Separatorabschnitts vorgesehen ist.

Der Anlageabschnitt des Trägerelements ist insbesondere rahmenartig ausgebildet und weist beispielsweise eine flanschartig ausgebildete Anlageebene auf. Hieran kann der genannte Halteabschnitt des Primäroptikelements anliegen, welcher die Lichtaustrittsfläche rahmenartig umgibt. Das Trägerelement ist vorzugsweise derart ausgestaltet, dass die flanschartige Anlageebene parallel zu dem Abdeckblech verläuft. Dann erstrecken sich insbesondere auch die Lichtaustrittsflächen des Primäroptikelements im Wesentlichen parallel zu dem Abdeckblech.

Darüber hinaus kann das Trägerelement Befestigungsabschnitte aufweisen, mittels welchen die Primäroptikeinheit mit übrigen Baugruppen verbunden werden kann beziehungsweise in einem Lichtmodul befestigt werden kann.

Der Separatorabschnitt kann Einführungsschrägen aufweisen, wobei wenigstens zwei Einführungsschrägen im Bereich eines Führungsloches trichterartig zusammenlaufen. Insofern bilden die Einführungsschrägen Trichterausnehmungen des Separatorabschnitts, welche sich in Richtung zum Anlageabschnitt hin aufweiten. Vorzugsweise ist für jeden Lichtleitabschnitt genau eine Trichterausnehmung vorgesehen. Diese Trichterausnehmungen sind stets so ausgebildet, dass ihre Wandungen den Lichtleitabschnitt nicht berühren. Diese Ausgestaltung erleichtert den Zusammenbau der Primäroptikeinheit insbesondere dann, wenn ein Primäroptikelement mit einer Vielzahl flexibler und dünner Lichtleitelemente verwendet wird.

Das Trägerelement kann aus Kunststoff, insbesondere einstückig, ausgebildet sein. Vorzugsweise wird ein Kunststoff verwendet, der für Spritzgussverfahren geeignet ist. Insbesondere wird ein Kunststoff gewählt, der bei hohen Temperaturen ausreichend dünnflüssig ist, um dünne Wandstärken zu ermöglichen. Das Spritzgussverfahren ermöglicht eine günstige Herstellung in großer Zahl. Durch das Abdeckblech wird das Trägerelement aus Kunststoff vor hohen Temperaturen geschützt. Als Kunststoffe können beispielsweise solche mit hohem Schmelzpunkt gewählt werden, wie Polyimide, Polyetherimide. Denkbar ist auch LCP.

Das Abdeckblech besteht vorzugsweise aus einem federnd ausgebildeten, metallischen Blechmaterial, welches insbesondere eine Dicke im Bereich von 0,1 mm bis 1 mm, vorzugsweise 0,2 mm aufweist.

Die Dicke des Abdeckblechs bestimmt dessen Festigkeit, so dass mit einem dicken Abdeckblech eine genaue Positionierung möglich ist. Andererseits werden die optischen Eigenschaften der Lichtleitabschnitte durch den Kontakt mit dem Abdeckblech in den Führungslöchern umso mehr beeinflusst, je dicker das Abdeckblech ist. Bei der Abwägung dieser Effekte gegeneinander haben sich die genannten Werte als vorteilhaft herausgestellt. Als Material kann beispielsweise Kupferblech verwendet werden, welches eine effektive elektrische Erdung und eine gute Wärmeleitung aufweist. Denkbar ist jedoch auch Stahlblech, insbesondere mit hoher Elastizität.

Zur weiteren Ausgestaltung des Primäroptikelements kann ein Befestigungselement vorgesehen sein, welches auf einer dem Abdeckblech abgewandten Seite des Trägerelements angeordnet ist. Dabei ist der Halteabschnitt des Primäroptikelements zwischen dem Befestigungselement und dem Trägerelement eingeklemmt. Dadurch kann das Primäroptikelement befestigt werden, ohne dass ein Verkleben oder Verschrauben nötig ist, was die optischen Eigenschaften des Primäroptikelements beeinträchtigen könnte. Das Befestigungselement ist insbesondere rahmenartig ausgebildet. Ein die Lichtabstrahlfläche rahmenartig umgebener Halteabschnitt kann dann zwischen dem Befestigungselement und den ebenfalls vorzugsweise rahmenartig ausgebildeten Anlageabschnitt des Trägerelements eingeklemmt und so gehalten werden.

Vorzugsweise bildet das Befestigungselement eine Stirnseite der Primäroptikeinheit, welche den Lichtentrittsflächen und dem Abdeckblech abgewandt ist. Diese Stirnseite ist bei Endmontage des Lichtmoduls einer Sekundäroptikeinheit zugewandt, mittels welcher die sich auf der Lichtaustrittsfläche einstellende Zwischenlichtverteilung in die gewünschte Abstrahllichtverteilung projiziert wird. Dabei besteht das Problem, dass bei Sonneneinstrahlung durch die Sekundäroptikeinheit in das Lichtmodul die Bauteile der Primäroptikeinheit (insbesondere das Befestigungselement und/oder das Trägerelement) in einem Fokusbereich der Sekundäroptikeinheit liegen können und so eine erhebliche Erwärmung auftreten kann. Daher ist es vorteilhaft, wenn die Primäroptikeinheit zusätzlich ein oder mehrere Wärmeschutzbleche aufweist, welche solche Abschnitte des Befestigungselements und/oder des Trägerelements bedecken, die bei Endmontage des Lichtmoduls der Sekundäroptikeinheit zugewandt sind.

Zur Lösung des eingangs genannten Problems wird außerdem ein Lichtmodul für Kfz-Scheinwerfer vorgeschlagen, umfassend:
- eine Lichtquelleneinheit, welche insbesondere eine Mehrzahl von gruppiert angeordneten Halbleiterlichtquellen zum Ausstrahlen von Licht aufweist;
- eine Primäroptikeinheit der vorstehend beschriebenen Art. Diese weist eine Mehrzahl von Lichtleitabschnitten auf, insbesondere für jede Halbleiterlichtquelle einen zugeordneten Lichtleitabschnitt. Die Führungslöcher des Abdeckblechs sind dabei derart angeordnet, dass die Lichteintrittsflächen der Lichtleitabschnitte positionsgenau den Halbleiterlichtquellen der Lichtquelleneinheit zugeordnet sind. So kann eine Lichteintrittsfläche beispielsweise exakt einer Lichtabstrahlfläche einer Halbleiterlichtquelle zugeordnet werden, vorzugsweise in sehr geringem Abstand, z.B. 0,1 mm. Dies ermöglicht eine effiziente Einkopplung von Licht. Die Primäroptikeinheit kann über ihr Trägerelement mit den übrigen Bauteilen des Lichtmoduls, zum Beispiel der Lichtquelleneinheit, verbunden werden.

Das Lichtmodul weist vorzugsweise außerdem eine Sekundäroptikeinheit auf, welche dazu ausgebildet ist, die von der Primäroptikeinheit auf ihrer Lichtabstrahlfläche in Betrieb des Lichtmoduls erzeugte Zwischenlichtverteilung als Abstrahllichtverteilung in das Vorfeld des Lichtmoduls zu projizieren.

Weitere Einzelheiten und vorteilhafte Ausgestaltungen der Erfindung sind der nachfolgenden Beschreibung zu entnehmen, anhand derer die in den Figuren dargestellte Ausführungsform der Erfindung näher beschrieben und erläutert ist.

Es zeigen:
- Figur 1: perspektivische Darstellung von Baueinheiten zum Aufbau eines Lichtmoduls;
- Figur 2: erfindungsgemäße Primäroptikeinheit in einer Draufsicht;
- Figur 3: Schnitt durch die Primäroptikeinheit gemäß Figur 2 entlang A-A; und
- Figur 4: Seitenansicht einer erfindungsgemäßen Primäroptikeinheit.

In der folgenden Beschreibung werden für einander entsprechende Bauteile und Merkmale jeweils dieselben Bezugszeichen verwendet.

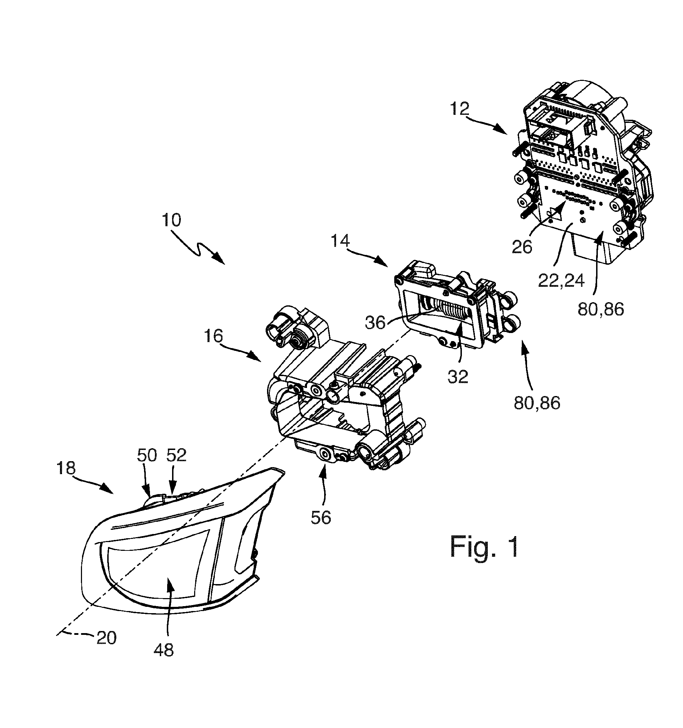

Figur 1 zeigt ein modular aufgebautes Lichtmodul 10, welches aus vormontierten Baueinheiten aufgebaut ist. Die Hauptkomponenten des Lichtmoduls 10 sind: Eine Lichtquelleneinheit 12, eine Primäroptikeinheit 14, ein Halterahmen 16 sowie eine Sekundäroptikeinheit 18. Diese Baueinheiten sind in der Darstellung gemäß Figur 1 entlang einer Montagerichtung 20 aufgereiht abgebildet und werden zur Endmontage des Lichtmoduls 10 im Wesentlichen entlang der Montagerichtung 20 aufeinander zu bewegt und zusammengefügt.

Die Lichtquelleneinheit 12 umfasst eine Leiterplatine 22, welche eine der Primäroptikeinheit 14 zugewandte Frontseite der Lichtquelleneinheit 12 bildet. Auf der Leiterplatine 22 sind eine Mehrzahl von Halbleiterlichtquellen 26 zum Ausstrahlen von Licht gruppiert in der Art einer Matrix angeordnet. Ferner sind auf der Leiterplatine 22 elektrische Bauteile einer Steuereinrichtung angeordnet, mittels welcher die einzelnen Halbleiterlichtquellen zur Lichtabgabe ansteuerbar sind.

Die Primäroptikeinheit 14 weist ein Primäroptikelement 32 auf, welches eine Vielzahl von Lichtaustrittsflächen 34 umfasst, die eine zusammenhängende Primäroptikaustrittsfläche 36 bilden. Das Primäroptikelement 32 weist außerdem eine Mehrzahl von Lichteintrittsflächen auf (in Fig. 1 nicht dargestellt), durch welche Licht in das Primäroptikelement 32 eingekoppelt werden kann. Das eingekoppelte Licht wird in dem Primäroptikelement 32 gebündelt oder kollimiert und tritt durch die Lichtaustrittsflächen 34 der Primäroptikaustrittsfläche 36 aus und bildet dort eine Zwischenlichtverteilung.

Zur Montage des Lichtmoduls 10 wird zwischen der Primäroptikeinheit 14 einerseits und der Sekundäroptikeinheit 18 andererseits der Halterahmen 16 angeordnet.

Die Sekundäroptikeinheit 18 umfasst eine als Sammellinse ausgebildete Linseneinrichtung 48. Diese ist dazu ausgebildet, im Betrieb des Lichtmoduls 10 die sich auf der Primäroptikaustrittsfläche 36 einstellende Zwischenlichtverteilung in die Abstrahllichtverteilung zu projizieren. Die Sekundäroptikeinheit 18 umfasst außerdem einen Linsenhalter 50, welcher einerseits zum Halten der Linseneinrichtung 48 dient, andererseits zu einer positionsgenauen Ausrichtung der Sekundäroptikeinheit 18 beiträgt. Hierzu weist der der Linseneinrichtung 48 abgewandte Abschnitt des Linsenhalters 50 einen Passabschnitt 52 auf, welcher mit einem entsprechenden Passabschnitt des Halterahmens 16 zusammengefügt werden kann.

Die Endmontage des Lichtmoduls 10 erfolgt unter anderem über eine Befestigungseinrichtung 80 zum positionsgenauen Befestigen der Primäroptikeinheit 14 und der Lichtquelleneinheit 12 aneinander. Die Befestigungseinrichtung 80 umfasst Befestigungsabschnitte 84 an der Primäroptikeinheit 14 und zugeordnete Befestigungsabschnitte 86 an der Lichtquelleneinheit 12.

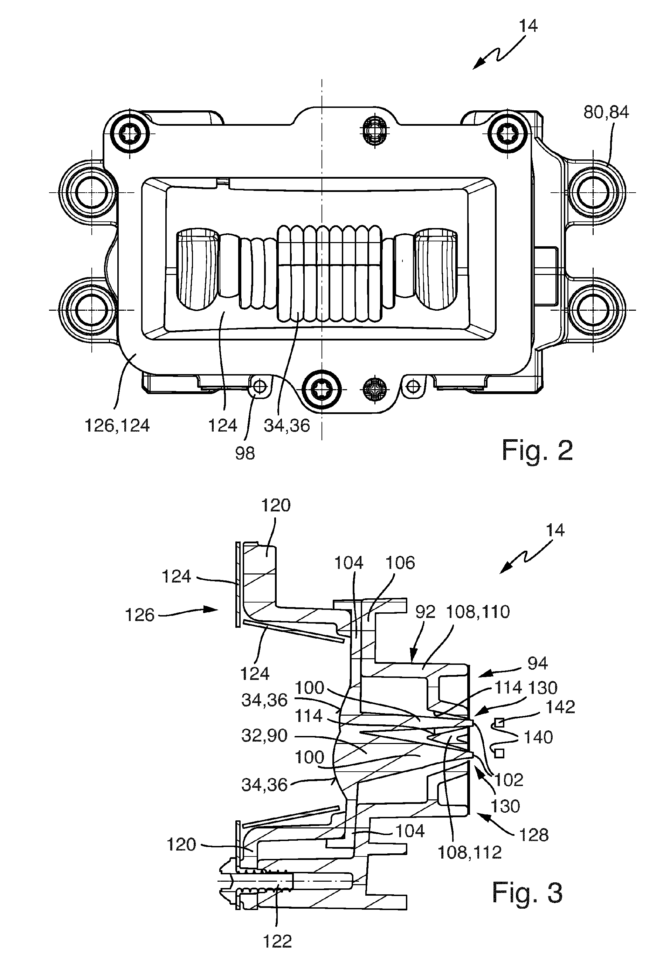

Der Aufbau der Primäroptikeinheit 14 wird im Folgenden anhand der Figuren 2 und 3 näher erläutert. Figur 2 zeigt die Primäroptikeinheit 14 in einer Draufsicht aus derjenigen Richtung, in welcher die Primäroptikeinheit 14 mit dem Halterahmen 16 beziehungsweise der Sekundäroptikeinheit 18 zusammengesetzt wird. Figur 3 zeigt einen Schnitt senkrecht zu der Darstellungsebene in Figur 2 entlang der Linie A-A.

Die Primäroptikeinheit 14 umfasst ein Primäroptikelement 32 oder 90, ein Trägerelement 92 sowie ein Abdeckblech 94.

Das Primäroptikelement 90 weist eine Mehrzahl von Lichtleitabschnitten 100 auf, welche sich jeweils zwischen der Lichtaustrittsfläche 34 (beziehungsweise der Primäroptikaustrittsfläche 36) und jeweils einer Lichteintrittsfläche 102 länglich erstrecken. Das Primäroptikelement 90 weist ferner einen Halteabschnitt 104 auf, welcher die Lichtaustrittsfläche 34 rahmenartig umgibt und sich im Wesentlichen senkrecht zu der Erstreckungsrichtung der Lichtleitabschnitte 100 erstreckt.

Jeder Lichtleitabschnitt 100 ist von Seitenflächen begrenzt, sie ausgehend von der jeweiligen Lichteintrittsfläche 102 derart verlaufen, dass Licht unter interner Totalreflexion in dem Lichtleitabschnitt 100 von der Lichteintrittsfläche 102 zur Lichtaustrittsfläche 34 geleitet werden kann.

Das Trägerelement 92 weist einen als flanschartige Anlageebene ausgebildeten Anlageabschnitt 106 auf. Dieser ist rahmenartig ausgestaltet, wobei der Halteabschnitt 104 des Primäroptikelements 32, 90 an den Anlageabschnitt 106 anliegt. Das Trägerelement 92 hat außerdem einen Separatorabschnitt 108, an welchem das Abdeckblech 94 angeordnet ist. Der Separatorabschnitt 108 erstreckt sich mit einem Abstandshaltebereich 110 zwischen dem Anlageabschnitt 106 und dem Abdeckblech 94. Ferner weist der Separatorabschnitt 108 einen Zwischenbereich 112 auf, welcher zwischen zwei Lichtleitabschnitten 100 verläuft.

Im Bereich des Abdeckblechs 94 weist der Separatorabschnitt 108 Einführungsschrägen 114 auf, welche in Richtung ausgehend von dem Anlageabschnitt 106 zum Abdeckblech 94 zusammenlaufen. Vorzugsweise sind die Einführungsschrägen 114 einerseits an dem Abstandshaltebereich 110, andererseits an dem Zwischenbereich 112 des Separatorabschnitts 108 vorgesehen. Dadurch wird eine Trichterausnehmung des Separatorabschnitts 108 gebildet, in welche je ein oder mehrere Lichtleitabschnitte 100 eingreifen.

Die Primäroptikeinheit 14 weist ferner ein Befestigungselement 120 auf. Dieses ist ebenfalls im Wesentlichen rahmenartig ausgebildet und dient dazu, den Halteabschnitt 104 an den Anlageabschnitt 106 des Trägerelements 92 zu pressen. Hierzu ist das Befestigungselement 120 mittels einer Verschraubung 122 an dem Trägerelement 92 befestigt. Der Halteabschnitt 104 des Primäroptikelements 90 verläuft zwischen dem rahmenartigen Anlageabschnitt 106 und dem rahmenartigen Befestigungselement 120 und wird dadurch eingeklemmt. Es ist daher nicht erforderlich, das Primäroptikelement 90 selbst durch eine Verschraubung zu befestigen.

Das Befestigungselement 120 weist Wärmeschutzbleche 124 an denjenigen Oberflächen auf, welche beim Zusammenbau des Lichtmoduls 10 der Sekundäroptikeinheit 18 zugewandt sind. Dadurch wird das Befestigungselement 120 und/oder das Trägerelement 92 vor zu starker Erwärmung beispielsweise durch Sonnenlicht geschützt, welches durch die Sekundäroptikeinheit 18 in den Bereich der Primäroptikeinheit 14 fokussiert wird.

Das Befestigungselement 120 beziehungsweise die Wärmeschutzbleche 124 bilden eine Stirnseite 126 der Primäroptikeinheit 14, welche der Sekundäroptikeinheit 18 beim Zusammenbau des Lichtmoduls 10 zugewandt ist.

Die gegenüberliegende Stirnseite 128 der Primäroptikeinheit 14 wird im Wesentlichen von dem Abdeckblech 94 gebildet. Diese Stirnseite 128 ist bei Endmontage des Lichtmoduls 10 der Lichtquelleneinheit 12 zugewandt. Das Abdeckblech 94 kann auch nur einen Bereich der Stirnseite 128 bilden. Dann kann z.B. der übrige Bereich der Stirnseite 128 von dem Trägerelement 92 gebildet sein.

Das Abdeckblech weist eine Mehrzahl von Führungslöchern 130 auf und ist derart angeordnet, dass die Lichtleitabschnitte 100 durch die Führungslöcher 130 verlaufen und durch das Abdeckblech 94 gehaltert werden. Für je einen Lichtleitabschnitt 100 ist gerade ein Führungsloch 130 vorgesehen. Das Führungsloch 130 ist derart ausgebildet, dass das Abdeckblech 94 den jeweiligen Lichtleitabschnitt 110 im Bereich seiner Lichteintrittsfläche 102 bündig umgibt.

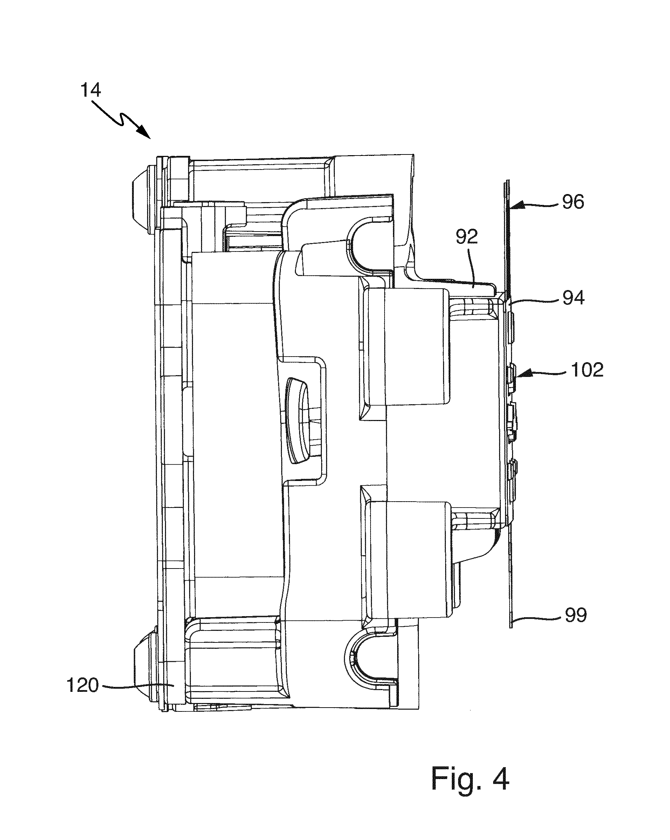

Jeder Lichtleitabschnitt 100 verläuft durch das zugeordnete Führungsloch 130 und steht mit seinem unmittelbar an seine Lichteintrittsfläche 102 anschließenden Endabschnitt geringfügig über die Oberfläche des Abdeckblechs 94 (Stirnseite 128) über. Dies ist in der Figur 4 deutlich erkennbar, welche die Primäroptikeinheit 14 gemäß Figur 2 in einer Seitenansicht senkrecht zu der Darstellungsebene in Figur 2 zeigt und auf welche weiter unten noch genauer eingegangen wird.

Das Primäroptikelement 32, 90 wird bei der erfindungsgemäßen Primäroptikeinheit 14 positionsgenau in Bezug auf eine Lichtquelleneinheit 12 gehaltert. Dabei erfolgt eine Halterung zum einen im Bereich der Lichtaustrittsfläche 34, 36 mittels des Halteabschnitts 104, welcher an den Anlageabschnitt 106 anliegt und durch das Befestigungselement 120 fixiert wird. Im Bereich der Lichteintrittsflächen 102 erfolgt eine positionsgenaue Halterung durch die Führungslöcher 130. Die Lichtleitabschnitte 100 hingegen berühren über ihren gesamten Verlauf weder den Anlageabschnitt 106 noch den Separatorabschnitt 108. Dazu sind die Einführungsschrägen 114 derart aufgeweitet, dass keine der Oberflächen der Lichtleitabschnitte 100 berührt wird. Die Einführungsschrägen 114 laufen im Bereich jeweils eines Führungslochs 130 zusammen. Insgesamt wird dadurch eine präzise Positionierung der Lichteintrittsflächen 102 relativ zu Lichtabstrahlflächen 140 einer in der Figur 3 angedeuteten Halbleiterlichtquelle 142 erzielt.

Das Abdeckblech 94 erstreckt sich im Wesentlichen parallel zu der flanschartigen Anlageebene des Anlageabschnitts 106. Die Lichtleitabschnitte 100 verlaufen im Wesentlichen senkrecht zu dieser Ebene. Denkbar ist jedoch auch ein gebogener Verlauf der Lichtleitabschnitte 100.

In der bereits oben angesprochenen Seitenansicht der Primäroptikeinheit 14 gemäß Figur 4 ist erkennbar, dass das Abdeckblech 94 mit einem Randabschnitt 96 in seiner Erstreckungsebene über das Trägerelement 92 hinausragt. An diesem Randabschnitt 96 weist das Abdeckblech 94 wenigstens ein Positionierungsloch 98 auf (welches in Figur 2 erkennbar ist), das eine definierte Position relativ zu den Führungslöchern 130 hat. Dadurch kann beim Zusammenbau des Lichtmoduls 10 die Primäroptikeinheit 14 positionsgenau im Bezug auf die Lichtquelleneinheit 12 ausgerichtet werden.

Das Abdeckblech 94 kann ferner einen Erdungskontakt 99 aufweisen, über welchen das Abdeckblech 94 elektrisch geerdet werden kann und so elektrostatische Entladungen von dem Primäroptikelement 90, 36 zu der Halbleiterlichtquelle 142 vermieden werden kann.

## Patentansprüche

1. Primäroptikeinheit (14) für Lichtmodule (10), umfassend:
- ein Primäroptikelement (32, 90) zum Formen einer gewünschten Zwischenlichtverteilung aus dem Licht einer Lichtquelle (26),
wobei das Primäroptikelement (32, 90) einen Halteabschnitt (104) zum Haltern des Primäroptikelements (32, 90) in der Primäroptikeinheit (14) sowie eine Mehrzahl von Lichtleitabschnitten (100) umfasst, welche sich jeweils zwischen einer Lichteintrittsfläche (102) zum Einkoppeln von Licht in den Lichtleitabschnitt (100) und eine Lichtaustrittsfläche (34) zum Auskoppeln von Licht aus dem Primäroptikelement (32, 90) erstrecken,
- ein Trägerelement (92), an welches der Halteabschnitt (104) zum Haltern des Primäroptikelements (32, 90) anliegt und **dadurch gekennzeichnet, dass** es derart ausgebildet ist, dass sich die Lichtleitabschnitte (100) berührungsfrei zu dem Trägerelement (92) erstrecken, die Primäroptikeinheit ist weiterhin **dadurch gekennzeichnet, dass** sie umfasst :
- ein Abdeckblech (94), welches eine Mehrzahl von Führungslöchern aufweist und welches derart ausgebildet und angeordnet ist, dass die Lichtleitabschnitte (100) durch die Führungslöcher (130) verlaufen und dadurch gehaltert werden.

2. Primäroptikeinheit (14) nach Anspruch 1, **dadurch gekennzeichnet, dass** das Abdeckblech (94) eine der Lichtaustrittsfläche (34) abgewandte Stirnseite (128) der Primäroptikeinheit (14) bildet.

3. Primäroptikeinheit (14) nach Anspruch 1 oder 2, **dadurch gekennzeichnet, dass** je ein Führungsloch (130) einem Lichtleitabschnitt (100) zugeordnet ist.

4. Primäroptikeinheit (14) nach dem vorherigen Anspruch, **dadurch gekennzeichnet, dass** jedes Führungsloch (130) derart ausgebildet ist, dass das Abdeckblech (94) den jeweils zugeordneten Lichtleitabschnitt (100) bündig umgibt.

5. Primäroptikelement (14) nach einem der vorherigen Ansprüche, **dadurch gekennzeichnet, dass** die Führungslöcher (130) matrixartig angeordnet sind.

6. Primäroptikelement (14) nach einem der vorherigen Ansprüche, **dadurch gekennzeichnet, dass** das Trägerelement (92) einen Anlageabschnitt (106), an welchen der Halteabschnitt (104) des Primäroptikelements (32, 90) anliegt, sowie einen Separatorabschnitt (108) aufweist, an dem das Abdeckblech (94) angeordnet ist, wobei der Separatorabschnitt (108) mit einem Zwischenbereich (112) abschnittsweise zwischen zwei Lichtleitabschnitten (100) verläuft.

7. Primäroptikelement (10) nach dem vorherigen Anspruch, **dadurch gekennzeichnet, dass** der Separatorabschnitt (108) Einführungsschrägen (114) aufweist, wobei wenigstens zwei Einführungsschrägen (114) im Bereich wenigstens eines Führungsloches (130) trichterartig zusammenlaufen.

8. Primäroptikelement (10) nach einem der vorherigen Ansprüche, **dadurch gekennzeichnet, dass** das Trägerelement (92) aus einem Kunststoff einstückig ausgebildet ist.

9. Primäroptikelement (14) nach einem der vorherigen Ansprüche, **dadurch gekennzeichnet, dass** das Abdeckblech (94) aus einem metallischen Blechmaterial, welches insbesondere eine Dicke im Bereich von 0,1 mm bis 1 mm, vorzugsweise 0,5 mm aufweist.

10. Primäroptikelement (14) nach einem der vorherigen Ansprüche, **dadurch gekennzeichnet, dass** ein Befestigungselement (120) vorgesehen ist, welches auf einer dem Abdeckblech (94) abgewandten Seite des Trägerelements (92) derart angeordnet ist, dass der Halteabschnitt (104) des Primäroptikelements (32, 90) zwischen Befestigungselement (120) und Trägerelement (92) eingeklemmt ist.

## Claims

1. A primary lens unit (14) for light modules (10), including:
- a primary lens element (32, 90) for forming a desired intermediate light distribution from the light of a light source (26),
the primary lens element (32, 90) including a mounting portion (104) for mounting the primary lens element (32, 90) in the primary lens unit (14) as well as including a plurality of light-guiding portions (100), which each extend between a light entry face (102) for inputting light into the light-guiding portion (100) and a light exit face (34) for outputting light from the primary lens element (32, 90);
- a carrier element (92), on which the mounting portion (104) for mounting the primary lens element (32, 90) rests; and **characterized in that** it is embodied in such a way that the light-guiding portions (100) extend in contactless fashion to the carrier element (92);
the primary lens unit is furthermore **characterized in that** it includes:
- a cover plate (94), which has a plurality of guide holes and which is embodied and located such that the light-guiding portion (100) extends through the guide holes (130) and are thereby mounted.

2. The primary lens unit (14) of claim 1, **characterized in that** the cover plate (94) forms a face end (128), facing away from the light exit face (34), of the primary lens unit (14).

3. The primary lens unit (14) of claim 1 or 2, **characterized in that** one guide hole (130) is assigned to each light-guiding portion (100).

4. The primary lens unit (14) of the foregoing claim, **characterized in that** each guide hole (130) is embodied such that the cover plate (94) surrounds the respective assigned light-guiding portion (100) in flush fashion.

5. The primary lens element (14) of one of the foregoing claims, **characterized in that** the guide holes (130) are arranged in matrixlike fashion.

6. The primary lens element (14) of one of the foregoing claims, **characterized in that** the carrier element (92) has both a contact portion (106), on which the mounting portion (104) of the primary lens element (32, 90) rests, and a separator portion (108), on which the cover plate (94) is located, and the separator portion (108), with an intermediate region (112), extends in in some portions between two light-guiding portions (100).

7. The primary lens element (10) of the foregoing claim, **characterized in that** the separator portion (108) has insertion guide chamfers (114), and at least two insertion guide chamfers (114) run together in funnel-like fashion in the vicinity of at least one guide hole (130).

8. The primary lens element (10) of one of the foregoing claims, **characterized in that** the carrier element (92) is embodied of plastic in one piece.

9. The primary lens element (14) of one of the foregoing claims, **characterized in that** the cover plate (94) comprises a sheet-metal material, which in particular has a thickness in the range from 0.1 mm to 1 mm, preferably 0.5 mm.

10. The primary lens element (14) of one of the foregoing claims, **characterized in that** a securing element (120) is provided, which is located, on a side of the carrier element (92) facing away from the cover plate (94), in such a way that the mounting portion (104) of the primary lens element (32, 90) is clamped in place between the securing element (120) and the carrier element (92).

## Revendications

1. Unité optique primaire (14) pour modules d'éclairage (10), comprenant:
- un élément optique primaire (32, 90) permettant de former une répartition de la lumière intermédiaire souhaitée à partir de la lumière d'une source lumineuse (26);
l'élément optique primaire (32, 90) comprenant une section de maintien (104) permettant de maintenir l'élément optique primaire (32, 90) dans l'unité optique primaire (14) ainsi qu'une pluralité de sections conductrices d'éclairage (100) s'étendant respectivement entre une surface d'entrée d'éclairage (102) servant à coupler l'éclairage dans la section conductrice d'éclairage (100) et une surface de sortie d'éclairage (34) servant à découpler l'éclairage par rapport à l'élément optique primaire (32, 90);
- un élément de support (92) au niveau duquel la section de maintien (104) permettant de maintenir l'élément optique primaire (32, 90) repose; et **caractérisée en ce que**: elle est réalisée de telle sorte que les sections conductrices d'éclairage (100) s'étendant sans contact par rapport à l'élément de support (92);
l'unité optique primaire est en outre **caractérisée en ce qu'**elle comprend:
- une tôle de revêtement (94) comportant une pluralité de trous de guidage et réalisée et disposée de telle sorte que les sections conductrices d'éclairage (100) s'étendent à travers les trous de guidage (130) et sont ainsi maintenues de cette façon.

2. Unité optique primaire (14) selon la revendication 1, **caractérisée en ce que** la tôle de revêtement (94) forme un côté avant (128), opposé à la surface de sortie d'éclairage (34), de l'unité optique primaire (14).

3. Unité optique primaire (14) selon la revendication 1 ou 2, **caractérisée en ce qu'**un trou de guidage (130) est respectivement associé à une section conductrice d'éclairage (100).

4. Unité optique primaire (14) selon la revendication précédente, **caractérisée en ce que** chaque trou de guidage (130) est réalisé de telle sorte que la tôle de revêtement (94) entoure en affleurement la section conductrice d'éclairage (100) respectivement associée.

5. Élément optique primaire (14) selon l'une quelconque des revendications précédentes, **caractérisé en ce que** les trous de guidage (130) sont disposés à la façon de matrices.

6. Élément optique primaire (14) selon l'une quelconque des revendications précédentes, **caractérisé en ce que** l'élément de support (92) comporte une section d'installation (106) contre laquelle la section de maintien (104) de l'élément optique primaire (32, 90) repose ainsi qu'une section de séparation (108) contre laquelle la tôle de revêtement (94) est disposée, la section de séparation (108) s'étendant en partie avec une zone intermédiaire (112) entre deux sections conductrices d'éclairage (100).

7. Élément optique primaire (10) selon la revendication précédente, **caractérisé en ce que** la section de séparation (108) comporte des pentes d'introduction (114), au moins deux pentes d'introduction (114) s'étendant conjointement en entonnoir dans la zone d'au moins un trou de guidage (130).

8. Élément optique primaire (10) selon l'une quelconque des revendications précédentes, **caractérisé en ce que** l'élément de support (92) est réalisé d'un seul tenant en matière plastique.

9. Élément optique primaire (14) selon l'une quelconque des revendications précédentes, **caractérisé en ce que** la tôle de revêtement (94) est réalisée à partir d'un matériau en tôle métallique comportant notamment une épaisseur comprise dans la zone de 0,1 mm à 1 mm, de préférence de 0,5 mm.

10. Élément optique primaire (14) selon l'une quelconque des revendications précédentes, **caractérisé en ce qu'**un élément de fixation (120) est prévu lequel est disposé de telle sorte sur un côté (94), opposé à la tôle de revêtement, de l'élément de support (92) que la section de maintien (104) de l'élément optique primaire (32, 90) est coincée entre l'élément de fixation (120) et l'élément de support (92).
